# EUROPEAN PATENT SPECIFICATION

(11) **EP 3 652 452 B1**
(45) Date of publication and mention of the grant of the patent: **31.03.2021**
(21) Application number: 18765731.7
(22) Date of filing: 08.08.2018
(51) Int. Cl.: F16B 31/02, F16B 23/00

(54) **PLUG BOLT**
STECKBOLZEN
BOULON BOUCHON

(30) Priority: 11.08.2017 ZA 201705444
(43) Date of publication of application: 20.05.2020
(73) Proprietor: University of Johannesburg, Johannesburg 2006 (ZA)
(72) Inventor: COETZER, Devon John, 1724 Johannesburg (ZA); NEL, Andre Leon, 2195 Johannesburg (ZA)
(74) Representative: Phillips & Leigh LLP
(86) International application number: PCT/IB2018/055975
(87) International publication number: WO 2019/030696

(56) References cited:
- EP-A2- 2 759 720
- WO-A1-95/22700
- WO-A1-97/13982
- GB-A- 2 140 523
- US-A- 3 763 725
- US-A1- 2015 023 753

## Description

### FIELD OF THE INVENTION

This invention relates to plug bolt and more specifically, but not exclusively, to a plug bolt for use with an air-cooled heat exchanger.

### BACKGROUND TO THE INVENTION

Plug bolts (or inspection bolts) are known in the art. Plug bolts may provide access to the interiors of sumps, pressure vessels, or other parts of machines or plants for inspection or maintenance purposes. Plug bolts typically cost orders of magnitude less than the devices they are installed in An example of a plug bolt is disclosed in GB2140523.

An example where plug bolts are used is air-cooled heat exchangers where the bolts are used to provide access to the interior of tubes used in the heat exchanger. Specifically, a plurality of bolts are used to seal a plug sheet which is connected to a tube sheet. Regular cleaning and inspection of the tubes of the heat exchanger is crucial to maintain performance and prolong the lifespan of the device.

One of the problems with conventional plug bolts is that when the bolts are over tightened, it may damage the thread of the device it is installed in. Once the thread is damaged it has to be repaired, causing downtime, or where it is not possible to repair, the device will have to be replaced.

This is a common problem in air-cooled heat exchangers where a damaged thread on the heat exchanger may lead to downtime of an entire plant. Such downtime may be very costly. In cases where only the bolt threads are stripped, the bolt can be replaced. However, in instances where the heat exchanger's threads are damaged, repairs must be done on the device or, if repair is not possible, the device must be replaced.

### OBJECT OF THE INVENTION

It is accordingly an object of this invention to provide a plug bolt which, at least partially, alleviates some of the problems associated with the prior art.

### SUMMARY OF THE INVENTION

In accordance with the invention there is provided a plug bolt having the features of claim 1. Embodiments have the following features:
- a body with a primary head at one end of the body and a threaded end at the opposite end of the body;
- a secondary head in between the primary head and the threaded end; and
- a weakened portion between the primary and secondary head;
- the weakened portion being shaped and sized such that the weakened portion fails when torque applied to the primary head exceeds a predetermined threshold.

The weakened portion may be a shearing portion wherein the primary head shears from the bolt when the torque exceeds the threshold.

The heads are adapted or shaped and sized to engage a tool used to fasten the plug bolt.

The predetermined threshold may be such that the primary head will shear from the bolt before the thread is damaged.

The primary head is be shaped and sized to prevent access to the secondary head with a tool.

The primary head is relatively larger than the secondary head to prevent a tool being used on the secondary head.

The secondary head may be encapsulated by a casing to prevent a tool being used on the secondary head.

The casing may be removed once the primary head has sheared to provide access to the secondary head.

The casing may be manufactured from polytetrafluoroethylene.

The primary and secondary heads may be hexagonal bolt heads. The secondary head may have a stellated shape.

Failure of the weakened portion provides visual indication of over tightening of the plug bolt.

The stellated head is shaped and sized such that the portions thereof will deform when the torque applied thereto is higher than a predetermined threshold. The threshold is such that the head deforms before the thread is damaged.

The deformation of the stellated head provides a visual indication of over tightening of the plug bolt.

The predetermined threshold may be between 250 and 550 Nm torque.

The bolt may be manufactured from carbon steel, such as:
- SA-105/SA-105M; or
- SA-106/SA-106M.

### BRIEF DESCRIPTION OF THE DRAWINGS

Embodiments of the invention are described below, by way of example only, and with reference to the drawings in which:
Figure 1 is a schematic perspective view of a plug bolt;
Figure 2 is a schematic side view of the plug bolt of figure 1;
Figure 3 is a schematic side view of a second embodiment of a plug bolt;
Figure 4 is a schematic perspective of a third embodiment of a plug bolt;
Figure 5 is a schematic side view of the plug bolt of figure 4;
Figure 6 is a schematic perspective view of the third embodiment of the plug bolt wherein the primary head is sheared off and the secondary head is engaged by a ring spanner; and
Figure 7 is a schematic top view of the plug bolt of figure 6.

### DETAILED DESCRIPTION OF THE DRAWINGS

With reference to the drawings in which like features are indicated by like numerals, a plug bolt is generally indicated by reference numeral 1.

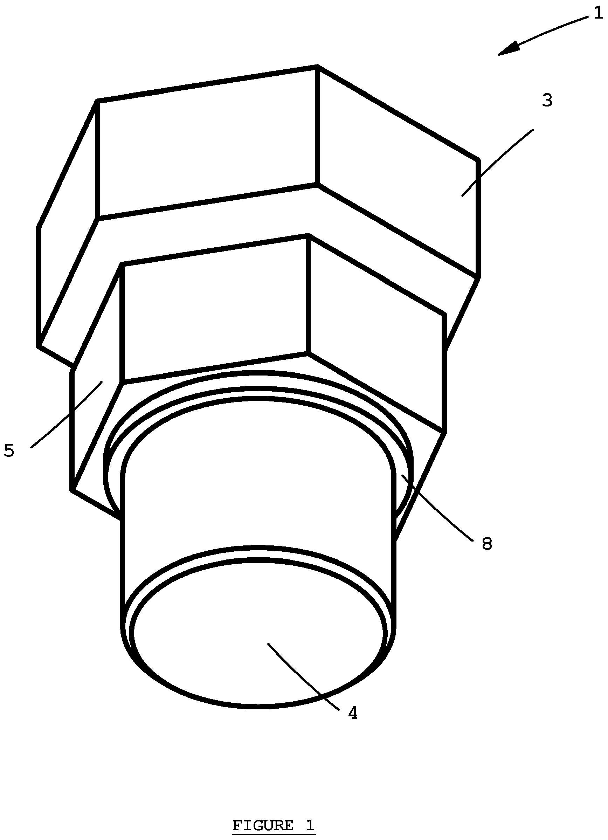

The plug bolt 1 includes a body with a primary head 3 at one end of the bolt 1 and a threaded portion 4 at the opposite end of the bolt 1. The threaded portion 4 engages complementary thread in a device (not shown) and the primary head 3 is used to tighten the bolt 1. In the example shown in figures 1 to 3, the primary head 3 is in the form of a hexagonal bolt head such that the bolt 1 may be tightened using standard tools. The bolt 1 is generally elongated and the threaded portion is cylindrical. The bolt is typically manufactured from carbon steel, such as SA-105/SA-105M, or SA-106/SA-106M.

The bolt includes a secondary head 5 between the primary head 3 and the threaded portion 4. In the example shown in figures 1 to 3 the secondary head 5 is in the form of a hexagonal bolt head. In another embodiment, the secondary head may have a stellated shape which provides additional features described further below.

The bolt 1 includes a shoulder 8 between the secondary head 5 and the threaded portion 4. The outer diameter of the shoulder 8 is smaller than that of the secondary head 5 and larger than the threaded portion 4. The shoulder 8 enables better seating of a washer used with the bolt 1.

The bolt 1 has a weakened portion 6 between the primary head 3 and the secondary head 5. The weakened portion 6 is in the form of an undercut, which is machined to be relatively smaller than the diameter of the threaded portion of the bolt 1. The undercut is a groove which is machined on a lathe using a parting tool to decrease the diameter of the weakened portion 6. The weakened portion 6 connects the primary hexagonal head 3 with the secondary head 5 and is shaped and sized such that the primary head 3 will shear from the secondary head 5 when the torque applied to the primary hexagonal head 3 exceeds a predetermined threshold. The weakened portion 6 will fail where the area (or diameter) of the portion is smallest. It is thus possible to calculate the torque required to shear the weakened portion 6 at the weakest point and machine the minimum diameter such that the weakened portion 6 will fail before the predetermined threshold is reached.

The predetermined threshold, and consequently the size and shape of the weakened portion 6, is chosen such that the weakened portion will fail before the thread 4 is damaged. Furthermore, the weakened portion 6 may also be designed such that the complementary thread on the device, which is typically more expensive and more expensive to repair than the bolt, is not damaged before failure of the weakened portion. Where the weakened portion fails, the primary head 3 will either completely shear from the bolt or deform to such an extent that it will be visible. This provides a form of visual indication where the bolt has been over tightened. The predetermined threshold may be between 250 and 550 Nm.

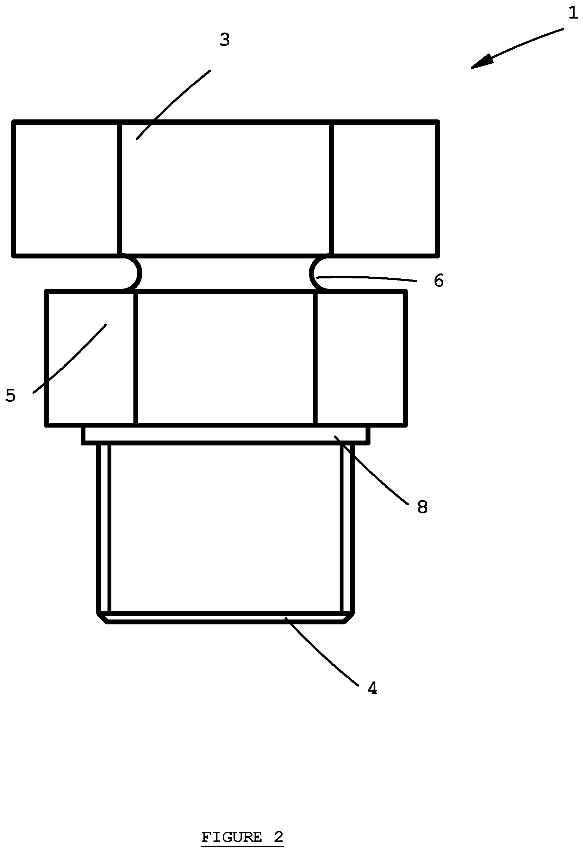

The primary head 3 is shaped and sized to prevent physical access to the secondary head 5 with a tool. In a first example (shown in figures 1 and 2), the primary head 3 is relatively larger than the secondary head 5 to prevent a tool being used on the secondary head. Specifically, the size of the primary head 3 is greater than the circumscribed diameter of the secondary head 5. This prevents accidental engagement of the secondary head by the tool used for the primary head whilst the primary head is intact. Further, any tool large enough to engage the primary head 3, will be too large to even partially engage the secondary head 5.

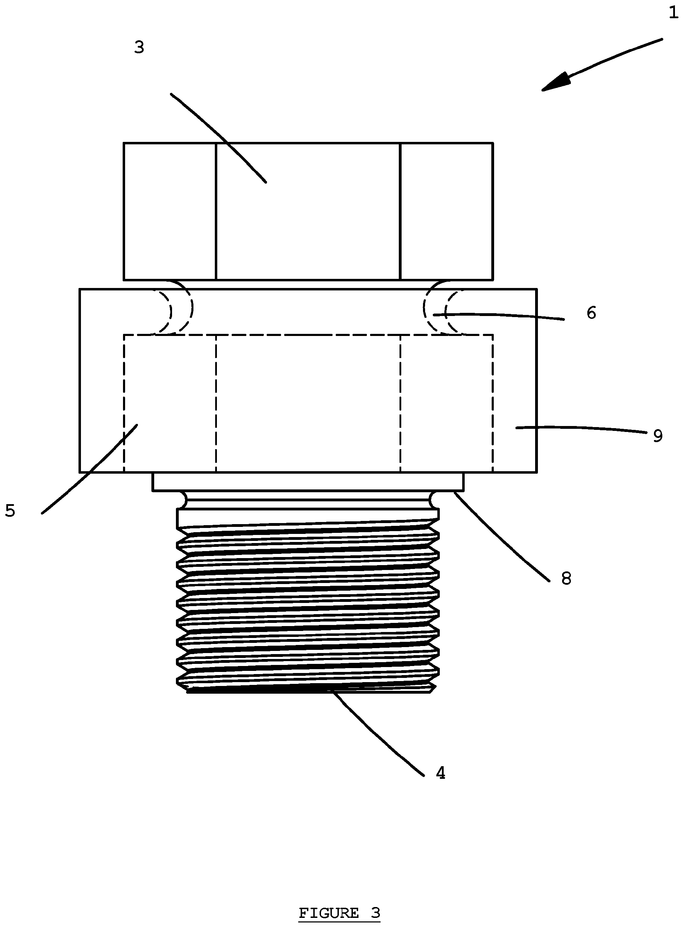

In another example (shown in figure 3), the access to the secondary head 5 is prevented by encapsulating the secondary head in a casing 9 to prevent a tool from being used thereon. The casing may be manufactured from polytetrafluoroethylene.

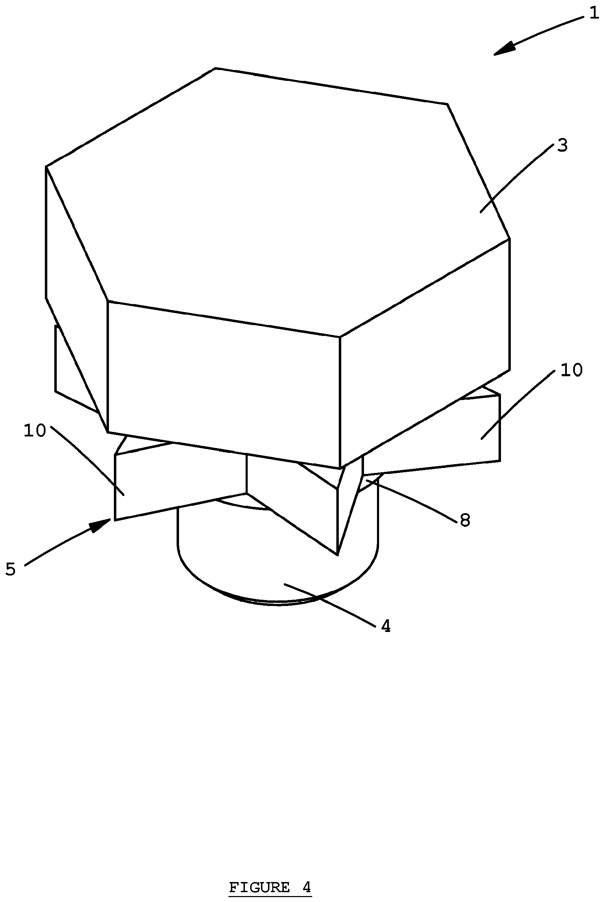

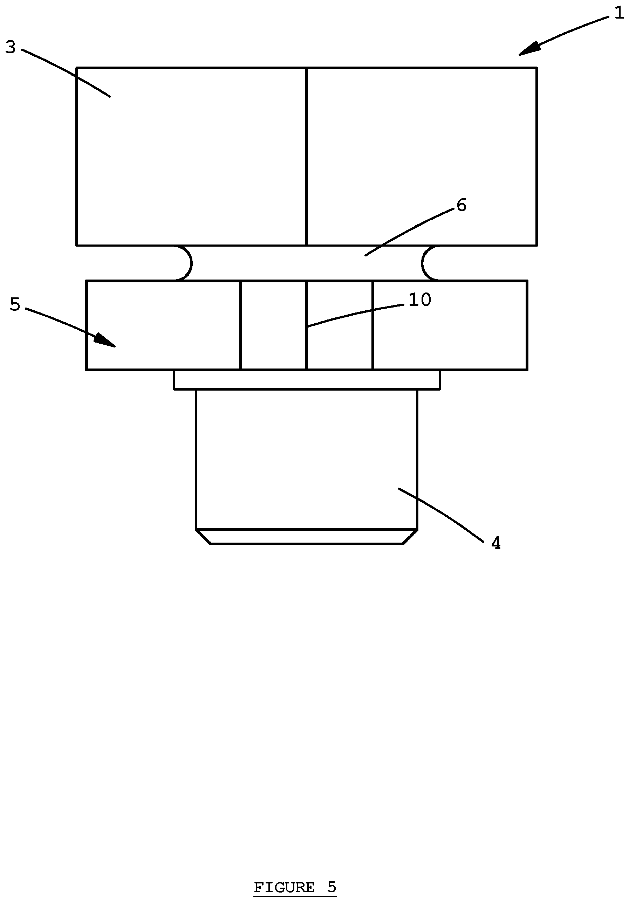

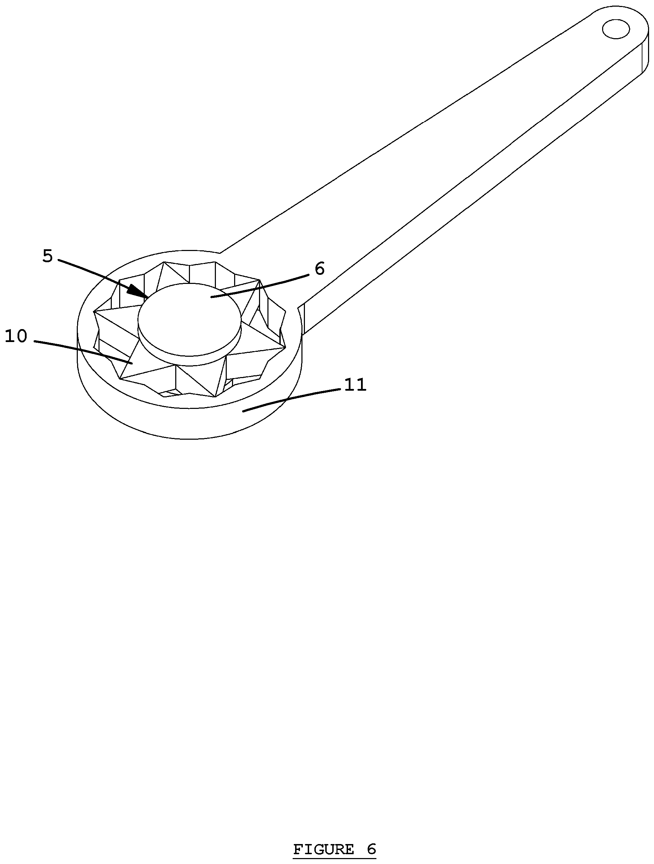

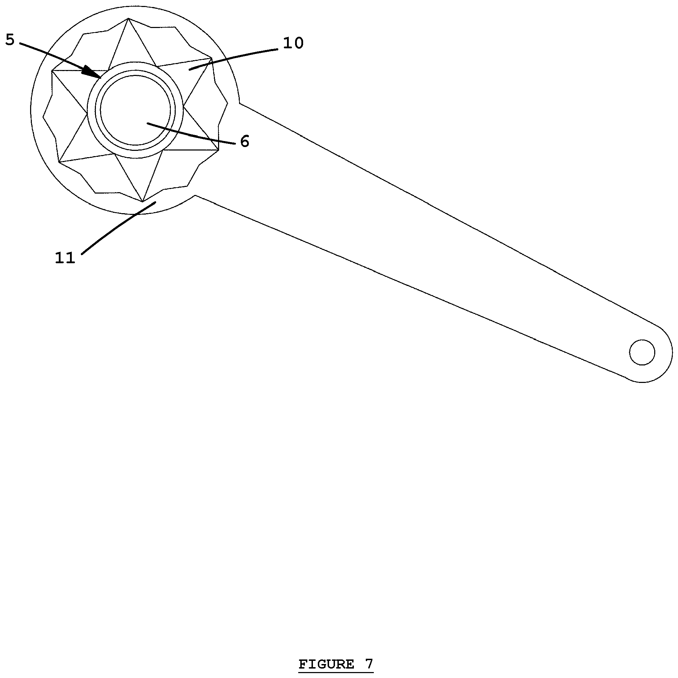

In the embodiment wherein the secondary head 5 has a stellated shape (shown in figures 4 to 7), the head is shaped and sized such that portions of the head will deform when the torque applied to the stellated head 5 is higher than a predetermined threshold. A stellated head will typically be star shaped with protrusions 10 extending radially outward from the central axis of the bolt. In the absence of a special tool, a stellated head may be engaged by a ring spanner 11, which engages the ends of the protrusions 10. The protrusions 10 may be shaped and sized to deform when the torque applied by the spanner 11 exceeds a threshold. This provides additional protection to prevent damage to the thread and the device when the secondary head is engaged. The deformation of the protrusions 10 will also prevent the tool from engaging the damaged head 5 and causing further damage. The stellated head prevents a user from using a tool which is not restricted by the relative size of the larger primary head 3, such as a flat or shifting spanner, from being used on the secondary head 5 directly. Where such a tool is used, protrusions 11 of the stellated head will fail before the thread would be damaged. Further, the deformation of the stellated head 5 provides a visual indication of over tightening of the plug bolt 1.

In use, many bolts 1 may be installed on a single device. Typically, during inspection or maintenance, the bolts 1 will be removed, the device inspected, cleaned or maintained, and sacrificial washers may be replaced. The bolts are then replaced in the device. A prudent approach would be to use a torque-wrench to fasten the bolts. However, it is possible that the torque wrench may not be properly calibrated or that it may be adjusted to an incorrect torque setting. This may cause a user to over tighten the bolts. A less prudent approach would be to use a tool like a slogging spanner (typically in conjunction with a heavy hammer). With such an approach, it will be very possible to over-tighten one or more of the bolts.

If during the replacement of the bolts one or more of the bolts 1 are over tightened, the weakened portion 6 of the bolt 1 will fail and prevent damage to the thread of the device. A user or supervisor overseeing the process will find on a visual inspection of the bolts that a head is askew or missing which indicates attempted over-tightening. The over-tightened bolt may be replaced quickly, and before the device is used. Where the primary head has completely sheared from the bolt 1, the secondary head may be used to loosen the bolt.

It is envisaged that the invention will provide a plug bolt which fails before it is overtightened to prevent damage to a device it is installed in, is easy to manufacture, and is as simple to use as the prior art.

The invention is not limited to the precise details as described herein. For example, instead of hexagonal or stellated head a square or external wrenching bolt head may be employed. Further, the weakened portion need not be weakened by a machined groove, and holes or other weakening structures may be employed to achieve the same result.

## Claims

1. A plug bolt (1) comprising:
- a body with a primary head (3) at one end of the body and a threaded portion (4) at an opposite end of the body;
- a secondary head (5) between the primary head (3) and the threaded portion (4);
- the secondary head (5) being shaped and sized to be engaged by an enclosed internal contact tool;
- a weakened portion (6) between the primary head (3) and the secondary head (5); and
- the weakened portion (6) being shaped and sized such that the weakened portion (6) fails when torque applied to the primary head (3) exceeds a predetermined threshold;
- **characterized in that** the body, secondary head (5), and weakened portion (6) are integrally formed and the primary head (3) is larger than the circumscribed diameter of the secondary head (5) such that:
∘ an enclosed internal contact tool capable of engaging the secondary head (5) is prevented from engaging the secondary head (5) by the size of the primary head (3); and
∘ an enclosed internal contact tool larger than the primary head (3) is incapable of engaging the secondary head (5).

2. The plug bolt of claim 1 wherein the primary head (3) is shaped and sized to be engaged by an enclosed internal contact tool.

3. The plug bolt (1) of claim 1 or 2 wherein the weakened portion (6) is a shearing portion and the primary head (3) shears from the bolt (1) when the applied torque exceeds the predetermined threshold.

4. The plug bolt (1) of claims 1 to 3 wherein the secondary head (5) is shaped and sized to engage a tool used to unfasten the plug bolt (1).

5. The plug bolt (1) of claims 1 to 4 wherein the predetermined threshold is such that the primary head (3) will shear from the plug bolt (1) before the threaded portion (4) is damaged.

6. The plug bolt (1) of claims 1 to 5 wherein failure of the weakened portion (6) provides visual indication of over tightening of the plug bolt (1).

7. The plug bolt (1) of claims 1 to 6 wherein the secondary head (5) is encapsulated by a casing (9) to prevent a tool being used on the secondary head (5).

8. The plug bolt (1) of claim 7 wherein the casing (9) is removable once the primary head (3) has sheared to provide access to the secondary head (5).

9. The plug bolt (1) of claims 7 or 8 wherein the casing (9) is manufactured from polytetrafluoroethylene.

10. The plug bolt (1) of claims 1 to 9 wherein the secondary head (5) deforms before the predetermined threshold is reached.

11. The plug bolt (1) of claims 1 to 10 wherein the primary head (3) and secondary head (5) are hexagonal bolt heads.

12. The plug bolt (1) of claims 1 to 10 wherein the secondary head (5) has a stellated shape.

13. The plug bolt (1) of claim 12 wherein the stellated shape includes radial protrusions (10) which are shaped and sized to fail when torque applied to the secondary head (5) exceeds the predetermined threshold.

14. The plug bolt (1) of claim 13 wherein the secondary head (5) is shaped and sized such that the protrusions (10) will deform when the torque applied thereto is higher than the predetermined threshold.

15. The plug bolt (1) of claims 12 to 14 wherein deformation of the secondary head (5) provides a visual indication of over tightening of the plug bolt (1).

## Patentansprüche

1. Verschlussbolzen (1), umfassend:
- einen Körper mit einem primären Kopf (3) an einem Ende des Körpers und einem Gewindeabschnitt (4) an einem entgegengesetzten Ende des Körpers;
- einen sekundären Kopf (5) zwischen dem primären Kopf (3) und dem Gewindeabschnitt (4);
- wobei der sekundäre Kopf (5) so geformt und dimensioniert ist, dass er durch ein eingeschlossenes internes Kontaktwerkzeug in Eingriff gebracht wird;
- einen Schwachstellenabschnitt (6) zwischen dem primären Kopf (3) und dem sekundären Kopf (5); und
- wobei der Schwachstellenabschnitt (6) so geformt und dimensioniert ist, dass der Schwachstellenabschnitt (6) versagt, wenn ein auf den primären Kopf (3) aufgebrachtes Anzugsmoment einen vorbestimmten Schwellenwert überschreitet;
- **dadurch gekennzeichnet, dass** der Körper, der sekundäre Kopf (5) und der Schwachstellenabschnitt (6) integral ausgebildet sind und der primäre Kopf (3) größer als der umschriebene Durchmesser des sekundären Kopfes (5) ist, so dass:
o ein eingeschlossenes internes Kontaktwerkzeug, das geeignet ist, den sekundären Kopf (5) in Eingriff zu bringen, an einem Ineingriffbringen des sekundären Kopfes (5) durch die Größe des primären Kopfes (3) gehindert wird; und
o ein eingeschlossenes internes Kontaktwerkzeug, das größer als der primäre Kopf (3) ist, nicht geeignet ist, den sekundären Kopf (5) in Eingriff zu bringen.

2. Verschlussbolzen nach Anspruch 1, wobei der primäre Kopf (3) so geformt und dimensioniert ist, dass er durch ein eingeschlossenes internes Kontaktwerkzeug in Eingriff gebracht wird.

3. Verschlussbolzen (1) nach Anspruch 1 oder 2, wobei der Schwachstellenabschnitt (6) ein Scherungsabschnitt ist und der primäre Kopf (3) von dem Bolzen (1) abschert, wenn ein aufgebrachtes Anzugsmoment den vorbestimmten Schwellenwert überschreitet.

4. Verschlussbolzen (1) nach Ansprüchen 1 bis 3, wobei der sekundäre Kopf (5) so geformt und dimensioniert ist, um ein zum Lösen des Verschlussbolzens (1) verwendetes Werkzeug in Eingriff zu bringen.

5. Verschlussbolzen (1) nach Ansprüchen 1 bis 4, wobei der vorbestimmte Schwellenwert derart ist, dass der primäre Kopf (3) von dem Verschlussbolzen (1) abschert, bevor der Gewindeabschnitt (4) beschädigt wird.

6. Verschlussbolzen (1) nach Ansprüchen 1 bis 5, wobei ein Versagen des Schwachstellenabschnitts (6) eine visuelle Anzeige eines zu starken Anziehens des Verschlussbolzens (1) bereitstellt.

7. Verschlussbolzen (1) nach Ansprüchen 1 bis 6, wobei der sekundäre Kopf (5) durch eine Umhüllung (9) eingekapselt ist, um ein Verwenden eines Werkzeugs an dem sekundären Kopf (5) zu verhindern.

8. Verschlussbolzen (1) nach Anspruch 7, wobei die Umhüllung (9) entfernbar ist, sobald der primäre Kopf (3) abgeschert wurde, um einen Zugang zu dem sekundären Kopf (5) bereitzustellen.

9. Verschlussbolzen (1) nach Ansprüchen 7 oder 8, wobei die Umhüllung (9) aus Polytetrafluorethylen hergestellt ist.

10. Verschlussbolzen (1) nach Ansprüchen 1 bis 9, wobei sich der sekundäre Kopf (5) verformt, bevor der vorbestimmte Schwellenwert erreicht ist.

11. Verschlussbolzen (1) nach Ansprüchen 1 bis 10, wobei der primäre Kopf (3) und der sekundäre Kopf (5) Sechskantbolzenköpfe sind.

12. Verschlussbolzen (1) nach Ansprüchen 1 bis 10, wobei der sekundäre Kopf (5) eine sternförmig Form aufweist.

13. Verschlussbolzen (1) nach Anspruch 12, wobei die sternförmige Form radiale Vorsprünge (10) umfasst, die so geformt und dimensioniert sind, dass sie versagen, wenn ein auf den sekundären Kopf (5) aufgebrachtes Anzugsmoment den vorbestimmten Schwellenwert überschreitet.

14. Verschlussbolzen (1) nach Anspruch 13, wobei der sekundäre Kopf (5) so geformt und dimensioniert ist, dass sich die Vorsprünge (10) verformen, wenn das darauf aufgebrachte Anzugsmoment höher als der vorbestimmte Schwellenwert ist.

15. Verschlussbolzen (1) nach Ansprüchen 12 bis 14, wobei eine Verformung des sekundären Kopfes (5) eine visuelle Anzeige eines zu starken Anziehens des Verschlussbolzens (1) bereitstellt.

## Revendications

1. Boulon-bouchon (1) comportant :
- un corps doté d'une tête primaire (3) à une extrémité du corps et d'une partie filetée (4) à une extrémité opposée du corps ;
- une tête secondaire (5) entre la tête primaire (3) et la partie filetée (4) ;
- la tête secondaire (5) étant mise en forme et dimensionnée pour subir l'action d'un outil à contact interne clos ;
- une partie affaiblie (6) entre la tête primaire (3) et la tête secondaire (5) ; et
- la partie affaiblie (6) étant mise en forme et dimensionnée de telle façon que la partie affaiblie (6) cède lorsqu'un couple appliqué à la tête primaire (3) dépasse un seuil prédéterminé ;
- **caractérisé en ce que** le corps, la tête secondaire (5) et la partie affaiblie (6) sont formés d'un seul tenant et **en ce que** la tête primaire (3) est plus grande que le diamètre circonscrit de la tête secondaire (5) de telle façon que :
o un outil à contact interne clos capable d'agir sur la tête secondaire (5) est empêché d'agir sur la tête secondaire (5) par la taille de la tête primaire (3) ; et
o un outil à contact interne clos plus grand que la tête primaire (3) est incapable d'agir sur la tête secondaire (5).

2. Boulon-bouchon selon la revendication 1, la tête primaire (3) étant mise en forme et dimensionnée pour subir l'action d'un outil à contact interne clos.

3. Boulon-bouchon (1) selon la revendication 1 ou 2, la partie affaiblie (6) étant une partie de cisaillement et la tête primaire (3) se détachant du boulon (1) par cisaillement lorsque le couple appliqué dépasse le seuil prédéterminé.

4. Boulon-bouchon (1) selon les revendications 1 à 3, la tête secondaire (5) étant mise en forme et dimensionnée pour agir sur un outil utilisé pour désolidariser le boulon-bouchon (1).

5. Boulon-bouchon (1) selon les revendications 1 à 4, le seuil prédéterminé étant tel que la tête primaire (3) se détache du boulon-bouchon (1) par cisaillement avant que la partie filetée (4) ne soit endommagée.

6. Boulon-bouchon (1) selon les revendications 1 à 5, la rupture de la partie affaiblie (6) donnant une indication visuelle d'un serrage excessif du boulon-bouchon (1).

7. Boulon-bouchon (1) selon les revendications 1 à 6, la tête secondaire (5) étant enveloppée par un capot (9) pour empêcher un outil d'être utilisé sur la tête secondaire (5).

8. Boulon-bouchon (1) selon la revendication 7, le capot (9) pouvant être retiré une fois que la tête primaire (3) s'est détachée par cisaillement pour donner accès à la tête secondaire (5).

9. Boulon-bouchon (1) selon les revendications 7 ou 8, le capot (9) étant fabriqué en polytétrafluoroéthylène.

10. Boulon-bouchon (1) selon les revendications 1 à 9, la tête secondaire (5) se déformant avant que le seuil prédéterminé soit atteint.

11. Boulon-bouchon (1) selon les revendications 1 à 10, la tête primaire (3) et la tête secondaire (5) étant des têtes de boulon hexagonal.

12. Boulon-bouchon (1) selon les revendications 1 à 10, la tête secondaire (5) présentant une forme en étoile.

13. Boulon-bouchon (1) selon la revendication 12, la forme en étoile comprenant des protubérances radiales (10) qui sont mises en forme et dimensionnées pour se rompre lorsqu'un couple appliqué à la tête secondaire (5) dépasse le seuil prédéterminé.

14. Boulon-bouchon (1) selon la revendication 13, la tête secondaire (5) étant mise en forme et dimensionnée de telle façon que les protubérances (10) se déforment lorsque le couple qui leur est appliqué est supérieur au seuil prédéterminé.

15. Boulon-bouchon (1) selon les revendications 12 à 14, une déformation de la tête secondaire (5) donnant une indication visuelle d'un serrage excessif du boulon-bouchon (1).
